# EUROPEAN PATENT APPLICATION

(11) **EP 0 522 160 A1**
(43) Date of publication of application: **13.01.1993**
(21) Application number: 91906261.2
(22) Date of filing: 15.03.1991
(51) Int. Cl.: B60S 3/04

(54) **METHOD OF WASHING MOTOR VEHICLE**

(30) Priority: 29.01.1991 JP 29574/91
(71) Applicant: FSK INC., Chita-shi, Aichi 478 (JP); TAKAGI, Yasuo, Yokohama-shi, Kanagawa 233 (JP)
(72) Inventor: KATO, Sakae, Tokai-shi Aichi 477 (JP)
(74) Representative: Linn, Samuel Jonathan
(86) International application number: JP9100352
(87) International publication number: WO9212877

(57) **Abstract**

A method of washing a motor vehicle, capable of removing various contaminants adhering to a vehicle body under low pressure without using large amounts of a detergent and water, wherein pressurized water spouted out of a nozzle (4) is directly applied to the vehicle body (6) to wash it, characterized in that ozone-containing air is mixed and dissolved into the pressurized water. The mixing and dissolving of the ozone-containing air can be realized by connecting an ozone generator (10) to a suck-in port (5) of an ejector (1) provided at the forward end thereof with a nozzle (4), for example.

## Description

### [TECHNICAL FIELD]

This invention relates to a physicochemical wet method of washing cars which can surely remove various kinds of deposits or foulings adhered onto the car bodies by jetting out a small amount of water against the car bodies with a low pressure.

### [BACKGROUND ART]

The deposits or foulings adhered onto the body of a car can roughly be classified into (1) those attributable to very strong thermochemical bond (chemical adhesion); (2) those attributable to van der Waals forces or capillary phenomenon (physicochemical adhesion); and (3) those attributable to static electricity or anchor effect (mechanical binding) (physical adhesion).

As the method of washing or removing such deposits, generally used are (1) water jet washing method (physical washing); (2) cleaner jet washing method (chemical washing); and (3) sponge wiping or brushing method combined with the method (1) or (2).

In the jet washing methods, the higher the injection pressure is, the higher generally becomes the percentage removal of the deposit particles. Accordingly, a considerably higher pressure is required for removing smaller particles or the deposits caught in the fine depressions on the car body.

Incidentally, a water stream having the injection pressure of 20 to 30 kg/cm²·G is sufficient to wash away particles having a diameter of 5 µm. However, the percentage removal of particles having a diameter of 1 µm to be achieved even by use of a water stream having the injection pressure of 35 kg/cm²·G is merely about 3 %, and a 80 % removal can barely be achieved at 70 kg/cm²·G.

These jet washing methods leave large amounts of waste water, and besides the waste water, if containing a cleanser, must be treated somehow.

### [DISCLOSURE OF THE INVENTION]

This invention has been accomplished with a view to providing a novel car jet washing method having overcome the above problems, characterized in that ozone is admixed with a water to be jetted and dissolved therein.

As the technique of dissolving ozone in a water to be jetted, given are a method in which an ejector which generates a negative pressure at the suction port thereof with the aid of the water to be jetted is connected to an ozone generator at the suction port so as to introduce an ozone containing air into the water, followed by jetting out of the resulting ozone containing water through an injection nozzle or delivery port; and a method in which an ozone containing air is supplied into a water tank provided as an independent unit through an air diffuser to prepare a water dissolved ozone therein, followed by pressurization of the resulting ozone containing water with a pump to allow the water to be jetted out through an injection nozzle. The essential thing is to use a means for effectively dissolving ozone in the washing water. It should be noted, however, that the operation of dissolving ozone is preferably carried out immediately before a car is washed in view of utilization of ozone.

While the pressure of the water to be jetted may depend on the particle size and kind of the deposit to be removed, as well as on the degree and state of adhesion thereof, it is usually 2 to 7 kg/cm²·G, preferably 3 to 7 kg/cm²·G, particularly preferably 7 kg/cm²·G.

Meanwhile, ozone concentration may also depend on the particle size and kind of the deposit to be removed, as well as on the degree and state of adhesion thereof, and it is usually 0.02 to 0.07 ppm, preferably 0.05 to 0.07 ppm, particularly preferably 0.07 ppm.

It should be appreciated that this invention does not prohibit additional use of brushing or a cleanser.

### [BRIEF DESCRIPTION OF THE INVENTION]

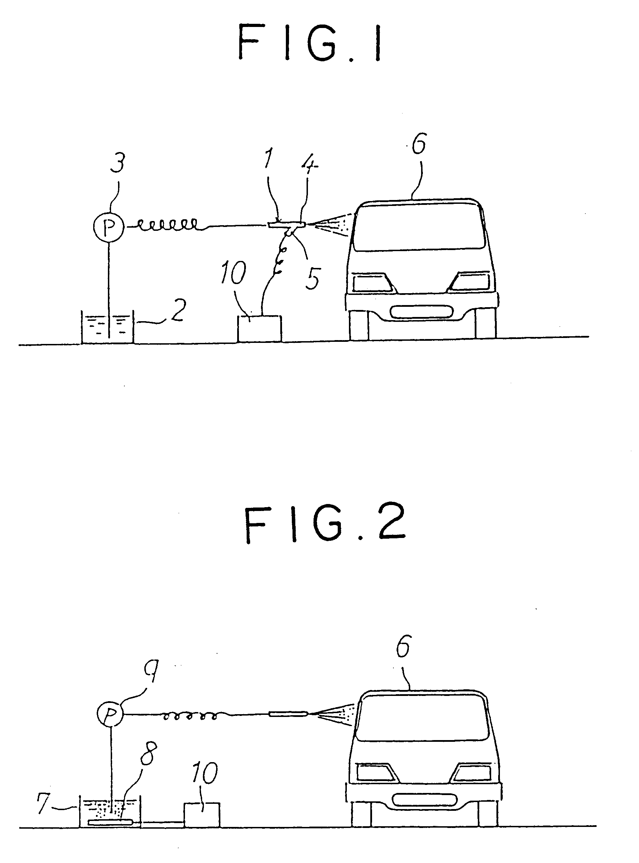

Fig. 1 is a flow diagram showing how a water dissolved ozone therein is prepared and jetted out according to one embodiment of this invention; and
Fig. 2 is a flow diagram showing how a water dissolved ozone therein is prepared and jetted out according to another embodiment of this invention.

| | |
|---|---|
| 1. Ejecter | 2. Washing water tank |
| 3. Pump | 4. Nozzle |
| 5. Suction port | 6. Car body |
| 7. Tank for dissolving an ozone into a washing water | |
| 8. Air diffuser | 9. Pump 10. Ozone generator |

### [BEST MODE FOR CARRYING OUT THE INVENTION]

Preferred embodiments of this invention will be described below specifically referring to the attached drawings.

### Example 1

An ejector 1 is designed to jet out a water charged in a washing water tank 2 through a nozzle 4 after pressurization of the water by a pump 3, in which the negative pressure generated at a suction port 5 is utilized to intake a gas therethrough. In this embodiment, the suction port 5 is connected to an ozone generator 10, and an ozone containing air is sucked into the ejector 1 through the suction port 5 by supplying a pressurized water into the ejector 1.

The ozone containing air sucked into the ejector 1 is admixed with the pressurized water and dissolved therein at an immediately upstream position relative to the nozzle 4, and the resulting ozone dissolving water is jetted out through the nozzle 4. Car washing is carried out by jetting out the ozone dissolving water directly against a car body 6. Brushing or a cleanser may of course be combined with the jet washing.

### Example 2

An air diffuser 8 is disposed at the bottom of a tank for dissolving an ozone into a washing water 7, and an ozone containing air supplied from an ozone generator 10 is released into the water through the air diffuser 8. Thus, the water in the tank 7 comes to contain ozone. Car washing is carried out by jetting out the thus prepared ozone containing water, after pressurized by a pump 9, through a nozzle directly against a car body 6. It is of course possible to use here again brushing or a cleanser in combination with the jet washing.

Since an ozone containing water is used for car washing in this invention, fine ozone gas bubbles (0.02 to 0.07 ppm) contained in the water generate strong shock waves (20 to 30 kHz) when they impinge on the car body and rupture, whereby deposits caught in fine depressions on the car body can be released and removed even by use of a low water pressure (injection pressure: 2 to 7 kg/cm²·G). Further, organic deposits such as oily foulings can also be decomposed and removed by the powerful oxidation action of ozone exhibited when the ozone gas bubbles are ruptured. Use of ozone has an additional advantage that it also decomposes of itself to oxygen, causing no secondary pollution.

As described above, since the present low water-pressure car washing method need not resort to a cleanser, not only the amount of cleanser, if used, can be reduced to 1/2 or less over the conventional jet washing methods, but also the amount of water can be reduced to 60 to 70 % of that used in any of the conventional methods, as well as, the pressurization energy can considerably be saved. Therefore, since the amount of waste water itself to be used for car washing can be reduced according to the method of this invention, and also the deposits or foulings are preliminarily decomposed by ozone, the waste water may be introduced to a waste water treating plant, where it can conveniently be applied for a treatment with an activated sludge process and the like using aerobic bacteria, facilitating the post treatment.

### [INDUSTRIAL APPLICABILITY]

As has been described heretofore, this invention enjoy many advantages in that deposits caught in the fine depressions on the car body or oily foulings which can hardly be removed by use of the conventional method can securely be washed away by using smaller amounts of water and cleanser with a low pressurization energy because of the ozone contained in the water, that no secondary pollution is caused by the present method, and that the waste water occurred after car washing can easily be treated.

Therefore, this invention contributes greatly to the development of industries as a novel car washing method having overcome the conventional problems.

## Claims

1. A method of washing a car body by jetting out a pressurized water through a nozzle directly against the car body, characterized in that an ozone-containing air is admixed to said pressurized water and dissolved therein.

2. The method according to Claim 1, wherein said pressurized water is jetted at an injection pressure of 2 to 7 kg/cm²·G.

3. The method according to Claim 1 or 2, wherein said ozone-containing air is dissolved in the pressurized water at a concentration of 0.02 to 0.07 ppm.

4. The method according to Claim 3, wherein the admixing and dissolving of the ozone-containing air is achieved by connecting an ozone generator to a suction port of an ejector having the nozzle at the tip.

5. The method according to Claim 3, wherein the ozone-containing air is preliminarily admixed with a washing water and dissolved therein by an air diffuser prior to pressurization.

## Amended claims

### Amended claims in accordance with Rule 86(2) EPC.

1. (Amended) A method of washing a car body by jetting out a pressurized water through a nozzle directly against the car body, characterized in that an ozone-containing air is admixed with said pressurized water and dissolved therein, wherein the shock waves generated by fine ozone gas bubbles when they impinge on the car body and rupture are the main factor of washing.

2. The method according to Claim 1, wherein said pressurized water is jetted at an injection pressure of 2 to 7 kg/cm²·G.

3. The method according to Claim 1 or 2, wherein said ozone-containing air is dissolved in the pressurized water at a concentration of 0.02 to 0.07 ppm.

4. The method according to Claim 3, wherein the admixing and dissolving of the ozone-containing air is achieved by connecting an ozone generator to a suction port of an ejector having the nozzle at the tip.

5. The method according to Claim 3, wherein the ozone-containing air is preliminarily admixed with a washing water and dissolved therein by an air diffuser prior to pressurization.
